# EUROPÄISCHE PATENTSCHRIFT

(11) **EP 1 547 737 B1**
(45) Veröffentlichungstag und Bekanntmachung des Hinweises auf die Patenterteilung: **29.11.2006**
(21) Anmeldenummer: 04023121.9
(22) Anmeldetag: 29.09.2004
(51) Int. Cl.: B27B 5/38, B27G 19/02

(54) **Kreissäge**
Circular saw
Scie circulaire

(30) Priorität: 24.12.2003 DE 10361297
(43) Veröffentlichungstag der Anmeldung: 29.06.2005
(73) Patentinhaber: Festool GmbH, 73240 Wendlingen (DE)
(72) Erfinder: Walter, Hartmut, Dipl.-Ing. (FH), 71332 Waiblingen (DE); Fuchs, Michael, Dipl.-Ing. (FH), 73734 Esslingen (DE)
(74) Vertreter: Reimold, Otto

(56) Entgegenhaltungen:
- DE-A1- 10 012 230
- DE-U1- 29 823 031

## Beschreibung

Die Erfindung betrifft eine Kreissäge gemäß dem Oberbegriff des Anspruchs 1, mit einem Antriebsaggregat, das einen elektrischen Antriebsmotor und eine mit dem Antriebsmotor in treibender Verbindung stehende Abtriebswelle mit einem freien Endbereich aufweist, auf dem ein Sägeblatt mittels eines gegen die dem Antriebsaggregat abgewandte Außenseite des Sägeblattes wirkenden Spannelements lösbar festspannbar ist, einem Maschinengehäuse, mit dem eine die Sägeblatt-Außenseite und das Spannelement abdeckende Abdeckwand verbunden ist, und einer zwischen einer unwirksamen Stellung und einer die Abtriebswelle blockierenden wirksamen Stellung verstellbaren Blockiereinrichtung, wobei die Abdeckwand zum Sägeblattwechsel aus ihrer das Sägeblatt und das Spannelement abdeckenden Schließstellung in eine vom Sägeblatt entfernte Offenstellung, in der das Spannelement zugänglich ist, überführbar ist und eine Betätigungspartie zum Betätigen der Blockiereinrichtung aufweist, so dass sich die Blockiereinrichtung bei geschlossener Abdeckwand in ihrer unwirksamen Stellung und bei geöffneter Abdeckwand in ihrer wirksamen stellung befindet. Eine solche kreissäge ist dem Dokument DE 298 23 031 U1 zu entnehmen

Andere übliche Kreissägen weisen in der Abdeckwand eine Zugangsöffnung auf, durch die hindurch das Spannelement von außen her zugänglich ist. Will man das Sägeblatt wechseln, greift man mit einem geeigneten Drehwerkzeug durch die Zugangsöffnung hindurch am Spannelement an. Dabei muss die Abtriebswelle blockiert werden, um ihr Mitdrehen beim Verdrehen des Spannelementes zu vermeiden. Ist das Spannelement gelöst, kann das Sägeblatt entnommen und das nächste Sägeblatt eingesetzt werden.

Bei der aus der DE 298 23 031 U1 bekannten Kreissäge der eingangs genannten Art ist die Blockiereinrichtung neben ihrer Funktion, das Lösen des Spannelements zu erleichtern, insbesondere als Ersatz für eine elektronische Sicherheitsschaltung zum Verhindern des unabsichtlichen Anlaufens des Antriebsmotors vorgesehen. Dies bedeutet, dass bei einem Defekt der Blockiereinrichtung die Gefahr eines Anlaufens des Antriebsmotors und somit eines Rotierens des Sägeblattes besteht.

Ausgehend hiervon liegt der vorliegenden Erfindung die Aufgabe zu Grunde, eine Kreissäge der eingangs genannten Art zu schaffen, die einen nicht nur in der Handhabung einfachen sondern auch für den Benutzer sicheren Sägeblattwechsel ermöglicht.

Diese Aufgabe wird erfindunsgemäß dadurch gelöst, dass die Abdeckwand eine Schaltpartie zum Umschalten einer die Stromversorgung der Kreissäge beherrschenden, zwischen einem die Stromversorgung gewährleistenden unwirksamen Zustand und einem die Stromversorgung unterbrechenden wirksamen Zustand schaltbaren Schaltereinrichtung aufweist, derart, dass sich die Schaltereinrichtung bei geschlossener Abdeckwand in ihrem unwirksamen Zustand und bei geöffneter Abdeckwand in ihrem wirksamen Zustand befindet.

Bei der erfindungsgemäßen Kreissäge wird zum Einsetzen oder Wegnehmen eines Sägeblattes die Abdeckwand in ihre Offenstellung überführt, so dass der Endbereich der Abtriebswelle und das Spannelement großflächig zugänglich sind. Dabei wird beim Öffnen gleichzeitig selbsttätig sowohl die Blockiereinrichtung wirksam, so dass für das Feststellen der Abtriebswelle kein zusätzlicher Handgriff erforderlich ist, als auch die Stromversorgung unterbrochen, d.h. die Kreissäge wird von der Stromversorgung abgetrennt, so dass die Kreissäge während des Sägeblattwechsels nicht unabsichtlich eingeschaltet werden kann, was die Sicherheit wesentlich erhöht. In umgekehrter Richtung werden beim Schließen der Abdeckwand die Blockiereinrichtung und die Schaltereinrichtung von selbst wieder unwirksam, so dass die Abtriebswelle und mit dieser das Sägeblatt angetrieben werden kann.

Beide Funktionen werden gemeinsam von der Abdeckwand ausgeführt, die hierzu eine Betätigungspartie zum Betätigen der Blockiereinrichtung und eine Schaltpartie zum Umschalten der Schaltereinrichtung aufweist.

Die DE 100 12 230 A1 beschreibt eine Vertikal-Sägemaschine mit einem dem Sägeblatt zugeordneten Abdeckgehäuse, das über zwei parallele und gleich lange Lenker mit einer feststehenden Führungssäule verbunden ist, so dass das Abdeckgehäuse zum Wechseln des Sägeblattes insgesamt unter Beibehaltung seiner vertikalen Ausrichtung angehoben werden kann. In der oberen Endstellung des Abdeckgehäuses betätigt einer der Lenker einen an der Führungssäule angeordneten Endschalter zur Blockierung des Antriebs bei frei liegendem Sägeblatt.

Zweckmäßige Ausgestaltungen sind in den Unteransprüchen angegeben.

Nachstehend wird ein Ausführungsbeispiel der Erfindung anhand der Zeichnung beschrieben. Es zeigen:
- Figur 1: eine Tisch-Zugsägeneinrichtung in Seitenansicht gemäß Pfeil I in Figur 2,
- Figur 2: die Zugsägeneinrichtung nach Figur 1 in Draufsicht von oben,
- Figur 3: die Kreissäge der Tisch-Zugsägeneinrichtung gemäß den Figuren 1 und 2 in gesonderter Darstellung in Schrägansicht, wobei sich die Abdeckwand in ihrer Schließstellung befindet,
- Figur 4: Die Anordnung nach Figur 3 in gleicher Darstellungsweise, jedoch mit geöffneter Abdeckwand,
- Figur 5: die gleiche Kreissäge mit geschlossener Abdeckwand in Seitenansicht gemäß Pfeil V in Figur 3,
- Figur 6: die gleiche Kreissäge bei geöffneter Abdeckwand in Seitenansicht gemäß Pfeil VI in Figur 4,
- Figur 7: die gleiche Kreissäge bei geschlossener Abdeckwand im Horizontalschnitt etwa gemäß der Schnittlinie VII-VII in Figur 5 und
- Figur 8: die gleiche Kreissäge in der Figur 7 entsprechender Schnittdarstellung, jedoch bei geöffneter Abdeckwand.

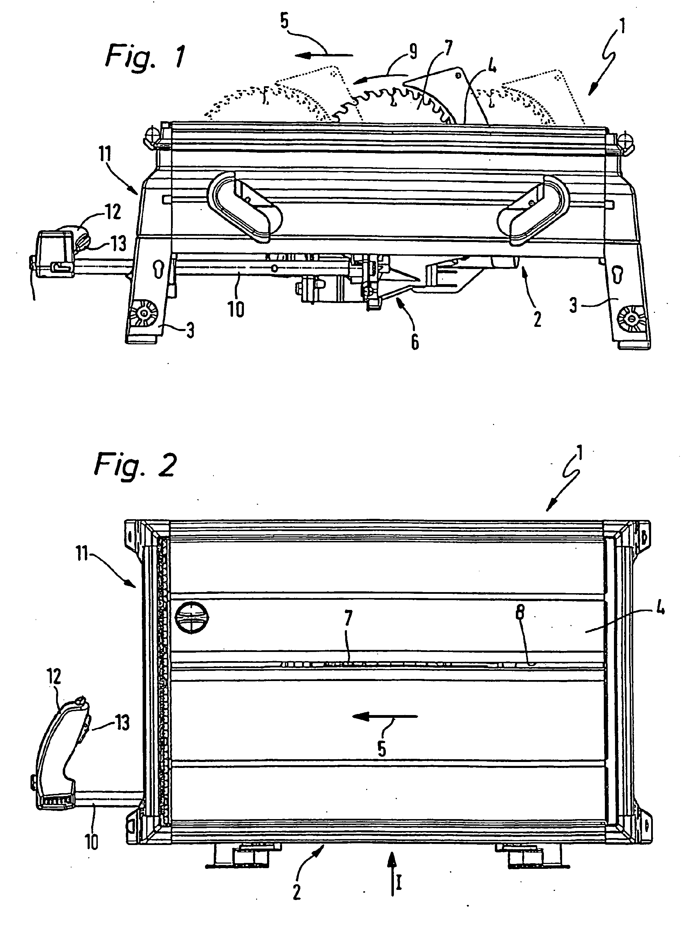

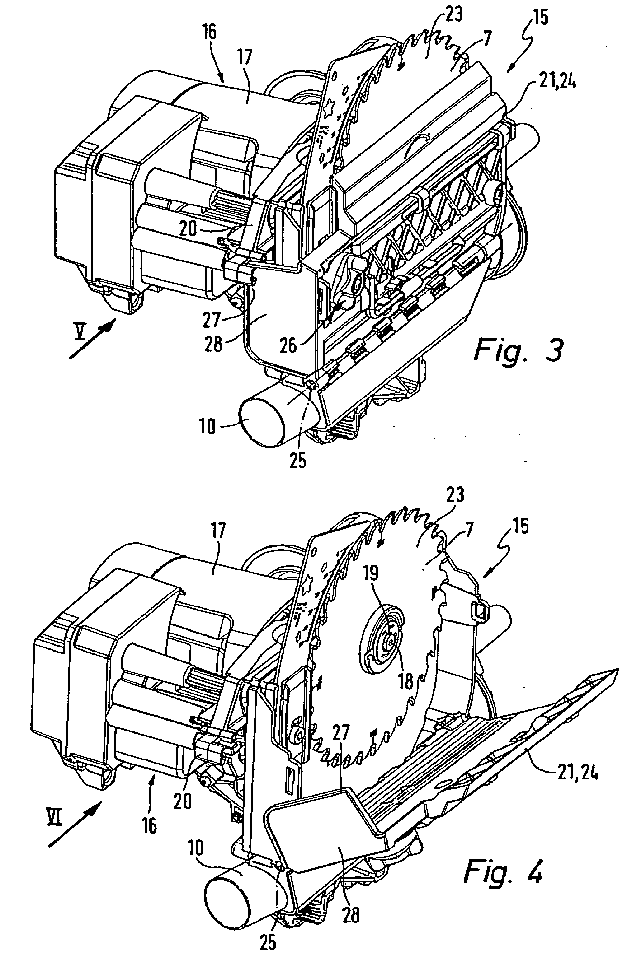

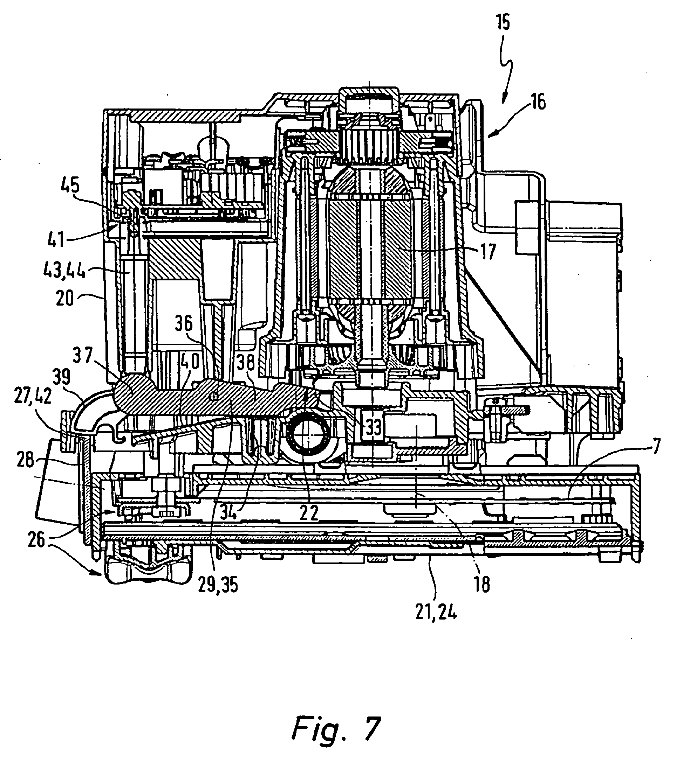

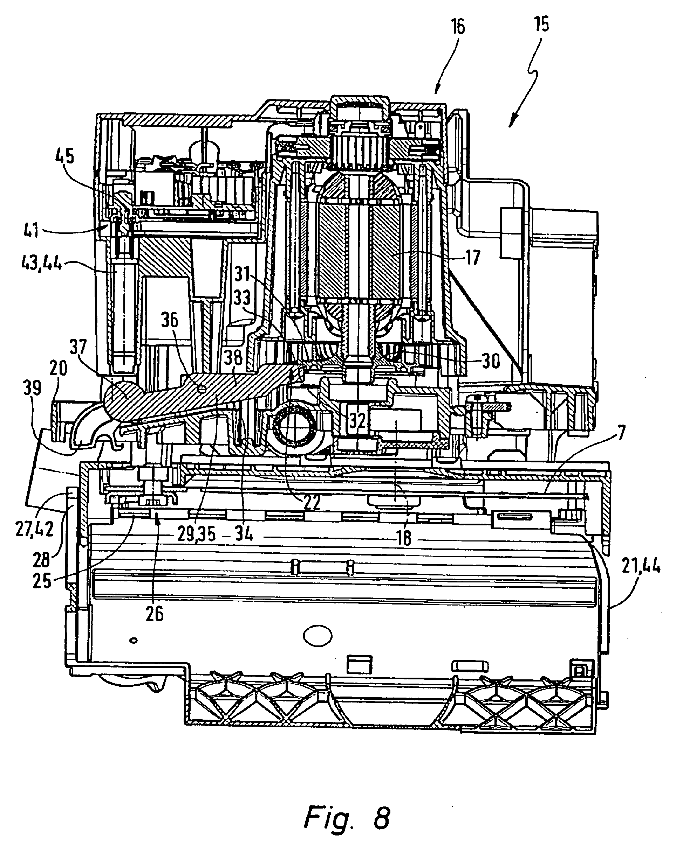

Aus den Figuren 1 und 2 geht eine transportable Tisch-Zugsägeneinrichtung 1 hervor, die ein Tischgestell 2 mit Standbeinen 3 und einer Auflageplatte 4 an der Tischgestell-Oberseite zum Auflegen eines in Sägerichtung 5 zu sägenden Werkstücks (nicht dargestellt) aufweist. Unterhalb der Auflageplatte 4 ist eine Schlitteneinheit 6 in und entgegen der Sägerichtung 5 verschiebbar geführt gelagert, die eine Kreissäge 15 (siehe Figuren 3 bis 8) mit einem motorisch antreibbaren Kreissägeblatt 7 trägt. Hierzu weist die Kreissäge 15 ein Antriebsaggregat 16 mit einem elektrischen Antriebsmotor 17 und einer mit dem Antriebsmotor 17 in treibender Verbindung stehenden Abtriebswelle 18 auf. In den Figuren 7 und 8 ist der Schnitt abseits der Abtriebswelle 18 gelegt, so dass sie nur strichpunktiert angedeutet worden ist. Das Sägeblatt 7 wird auf dem freien Endbereich der Abtriebswelle 18 mittels eines gegen die dem Antriebsaggregat 16 abgewandte Außenseite des Sägeblattes 7 wirkenden Spannelements 19, im dargestellten Falle eine auf den Endbereich der Abtriebswelle 18 geschraubte Spannschraube, lösbar festgespannt.

Die Rotationsachse des Sägeblattes, d.h. die Achslinie der Abtriebswelle 18, verläuft rechtwinkelig zur Sägerichtung 5. Die Drehrichtung des Sägeblattes 7 ist in Figur 1 durch den Pfeil 9 angegeben. Das zu sägende Werkstück wird vor der sich nach unten drehenden Vorderseite des Sägeblattes 7 auf die Auflageplatte 4 gelegt und festgehalten. Bewegt man die Schlitteneinheit 6 nach vorne, d.h. in den Figuren 1 und 2 nach links, greift das Sägeblatt 7 am Werkstück an und führt an diesem den gewünschten Sägeschnitt aus. In Figur 1 sind zusätzlich zu der mit ausgezogenen Linien dargestellten Stellung des Sägeblattes 7 zwei weitere Sägeblattstellungen punktiert angedeutet. Dies soll den Bewegungsweg des Sägeblattes symbolisieren.

Das Kreissägeblatt 7 ist so an der Kreissäge 15 oder die Kreissäge 15 so an der Schlitteneinheit 6 gelagert, dass es in der Höhe verstellt werden kann. Dabei befindet es sich in einer nicht dargestellten Ausgangsstellung unterhalb der Auflageplatte 4. Beim Betrieb, wenn ein Werkstück gesägt werden soll, nimmt das Sägeblatt 7 dagegen eine nach oben über die Auflageplatte 4 hochstehende Betriebsstellung ein, in der es durch einen in der Auflageplatte 4 enthaltenen Längsschlitz 8 greift.

Das Bewegen der Schlitteneinheit 6 erfolgt mittels einer Betätigungsstange 10, die mit der Schlitteneinheit 6 verbunden ist und zur die Vorderseite bildenden Bedienseite 11 des Tischgestells 2 verläuft. Die Betätigungsstange 10 trägt an ihrem vor die Tischgestell-Bedienseite 11 vorstehenden Ende einen Handgriff 12 mit einem Ein-/Ausschalter 13 zum Ein- und Ausschalten des Elektromotors 17. Durch lineares Verschieben der Betätigungsstange 10 wird die Schlitteneinheit 6 und somit die Kreissäge 15 in Sägerichtung 5 verschoben.

An der Bedienseite 11 des Tischgestells 2 können sich noch weitere Bedien- und Verstellelemente befinden, mit denen beispielsweise die Neigung des Sägeblatts 7 zur Auflageplatte 4 eingestellt oder die Betätigungsstange 10 verriegelt werden kann.

Die Auflageplatte 4 ist in zwei beiderseits des Längsschlitzes 8 angeordnete Plattenhälften aufgeteilt, die abgenommen werden können, so dass die darunter befindliche Schlitteneinheit 6 und die Kreissäge 15 zugänglich werden.

Die vorliegende Erfindung ist nicht nur für derartige Tisch-Zugsägeneinrichtungen 1 sondern auch für sonstige Handkreissägen sowie für stationäre Kreissägen geeignet.

Das Sägeblatt 7 ist, sieht man von dem nach oben hin vorstehenden Sägeblattbereich ab, der zum Sägen gebraucht wird und oben über die Auflageplatte 4 vorsteht, zur Vermeidung von Verletzungen der Bedienungspersonen geschützt untergebracht. Hierzu weist die Kreissäge 15 ein Maschinengehäuse 20 auf, mit dem eine die Sägeblatt-Außenseite 23 abdeckende Abdeckwand 21 verbunden ist. Die Abdeckwand 21 kann aus ihrer das Sägeblatt 7 abdeckenden Schließstellung (Figuren 3, 5 und 7) in eine vom Sägeblatt 7 entfernte Offenstellung (Figuren 4, 6 und 8) überführt werden, so dass das Sägeblatt 7 und dabei insbesondere das Spannelement 19 zugänglich wird. Zum Wechseln des Sägeblattes 7 wird also die Abdeckwand 21 geöffnet, so dass man das Spannelement 19 lösen bzw. festziehen kann. In der Schließstellung erstreckt sich die Abdeckwand 21 im Wesentlichen parallel zum Sägeblatt 7.

Beim zweckmäßigen Ausführungsbeispiel wird die Abdeckwand 21 von einem Schwenkteil 24 gebildet, das über eine Schwenkachse 25 mit dem Maschinengehäuse 20 verbunden und somit zwischen der Schließstellung und der Offenstellung verschwenkbar ist. Auf diese Weise bleibt die Abdeckwand 21 auch in ihrer Offenstellung an der Kreissäge 15. Prinzipiell könnte die Anordnung jedoch auch so getroffen werden, dass die Abdeckwand insgesamt vom Maschinengehäuse entfernt wird.

Die Schwenkachse 25 verläuft zweckmäßigerweise parallel zur Sägerichtung 5, d.h. parallel zur Vorschubrichtung, in der beim Sägen die Kreissäge oder das Werkstück vorbewegt wird.

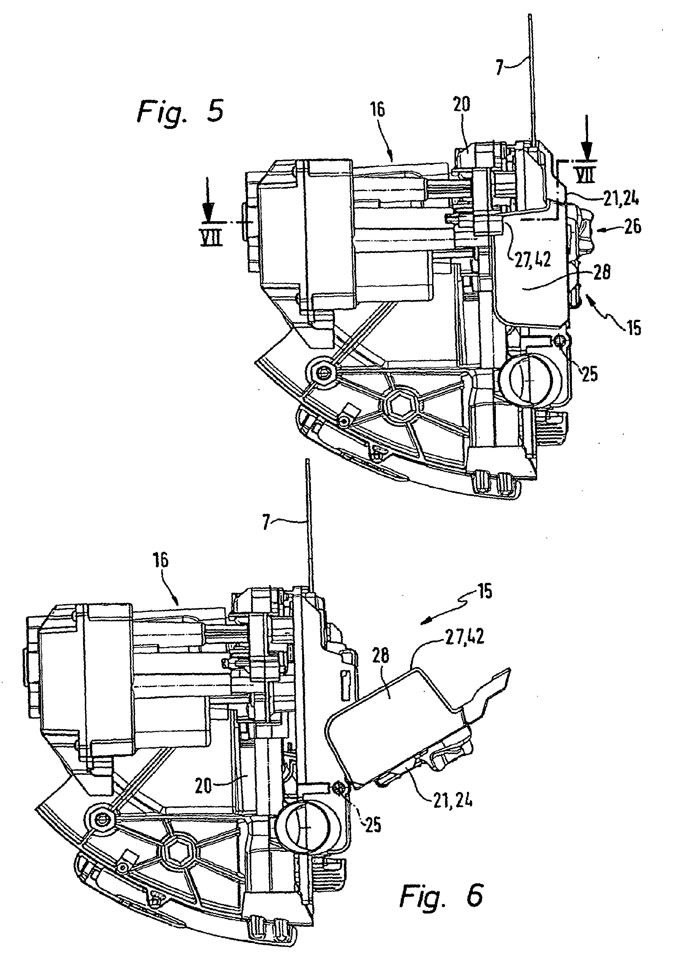

Insbesondere aus den Figuren 4 und 6 ist ersichtlich, dass die Schwenkachse 25 am beim Sägen dem Werkstück entgegengesetzten Rand des Schwenkteils 24 angeordnet ist, so dass das Schwenkteil oben, wo das Sägeblatt 7 vorsteht, vom Sägeblatt weggeschwenkt wird.

Eine weitere zweckmäßige Maßnahme besteht darin, dass die Abdeckwand 21, d.h. das Schwenkteil 24, in der Schließstellung mittels einer werkzeuglos zu betätigenden Verschlusseinrichtung 26 mit dem Maschinengehäuse 20 verbunden ist. Auf diese Weise ist für das Entfernen der Abdeckwand 21 vom Maschinengehäuse 20 und das Befestigen der Abdeckwand 21 in der Schließstellung am Maschinengehäuse 20 kein Werkzeug erforderlich. Eine solche werkzeuglos zu betätigende Verschlusseinrichtung 26 kann in verschiedener Weise erfolgen. Hierfür stehen dem Fachmann die üblichen Möglichkeiten zur Verfügung. Beim Ausführungsbeispiel kann die Verschlusseinrichtung 26 einen außen am Schwenkteil 24 angeordneten Dreh- oder Schiebeknopf enthalten, mit dem innen zwei Verriegelungsteile relativ zueinander verschoben werden, so dass in der Schließstellung eine Verriegelung stattfindet.

Beim Lösen und Festziehen des Spannelements 19 muss die Abtriebswelle 18 festgehalten werden, da sie sich sonst beim Verdrehen des Spannelements 19 mitdrehen würde. Daher ist eine Blockiereinrichtung 22 vorhanden, die zwischen einer unwirksamen Stellung, in der sie das Verdrehen der Abtriebswelle 18 unbeeinflusst lässt, und einer die Abtriebswelle 18 blockierenden wirksamen Stellung verstellbar ist. Das Verstellen der Blockiereinrichtung 22 erfolgt durch das Schwenkteil 24, das hierzu eine entsprechende Betätigungspartie 27 aufweist, so dass sich die Blockiereinrichtung 22 bei geschlossener Abdeckwand 21 in ihrer unwirksamen Stellung und bei geöffneter Abdeckwand 21 in ihrer wirksamen Stellung befindet. Auf diese Weise ist die Stellung der Blockiereinrichtung 22 selbsttätig an die Stellung der Abdeckwand 21 bzw. des Schwenkteils 24 gekoppelt. Öffnet man die Abdeckwand 21, wird die Blockiereinrichtung 22 automatisch wirksam. Umgekehrt wird die Blockiereinrichtung 22 beim Schließen der Abdeckwand 21 automatisch unwirksam, so dass die Kreissäge eingeschaltet werden kann.

Die Abdeckwand 21 weist einen bei befestigtem Sägeblatt 7 in der Schließstellung der Abdeckwand am Sägeblatt 7 vorbei zum Maschinengehäuse 20 hin vorstehenden Betätigungsansatz 28 auf, der die Betätigungspartie 27 bildet. Im dargestellten Falle steht der Betätigungsansatz 28 L-ähnlich von der Abdeckwand 21 ab. Dabei weist er eine plattenartige Gestalt auf. Die Betätigungspartie bzw. der Betätigungsansatz 28 ist in der Schließstellung der Abdeckwand 21 zum Maschinengehäuse 20 hin und in der Offenstellung vom Maschinengehäuse 21 weg geschwenkt.

Die Blockiereinrichtung 22 weist ein von der Betätigungspartie 27 des Schwenkteils 24 betätigtes Blockierelement 29 auf, das in seiner wirksamen Stellung (Figur 8) in ein in treibender Verbindung mit dem Antriebsmotor 17 stehendes Teil 30 eingreift, das beim Ausführungsbeispiel von einem zur Kühlung des Antriebsmotors 17 vorgesehenen Gebläserad 31 gebildet wird, das drehfest auf der Motorwelle sitzt. Das Gebläserad 31 weist über seinen Umfang verteilt angeordnete Aussparungen 32 auf, denen ein am Blockierelement 29 vorgesehener Blokkiervorsprung 33 zugeordnet ist, der in der wirksamen Stellung der Blockiereinrichtung 22 in eine der Aussparungen 32 eingreift.

Anstelle des Gebläserades 31 könnte es sich auch um ein anderes im Antriebsstrang liegendes Teil handeln, mit dem das Blockierelement in Eingriff gelangt.

Die Betätigungspartie 27 des Schwenkteils 24 kann unmittelbar am Blockierelement 29 angreifen, wie es beim zweckmäßigen Ausführungsbeispiel der Fall ist. Zwischen der Betätigungspartie des Schwenkteils und dem Blockierelement könnte jedoch auch ein oder mehrere Zwischenglieder vorhanden sein.

Das Blockierelement 29 wird durch eine Federeinrichtung 34 in Richtung auf seine wirksame Stellung hin belastet. Bei der Federeinrichtung 34 handelt es sich im dargestellten Falle um eine einerseits am Maschinengehäuse 20 gelagerte und andererseits am Blockierelement 29 angreifende Schraubenfeder.

Überführt man die Abdeckwand 21 in ihre Offenstellung, kommt das Blockierelement 29 von der Betätigungspartie 27 des Schwenkteils 24 frei und verstellt sich unter der Wirkung der Federeinrichtung 34 in seine wirksame Stellung, wie aus Figur 8 ersichtlich ist.

Das Blockierelement 29 wird von einem Schwenkhebel 35 gebildet. Der Schwenkhebel 35 ist um eine rechtwinkelig zur Abtriebswelle 18 und zur Schwenkachse 25 stehende Gelenkachse 36 schwenkbar. Das Blockierelement 29 führt somit zwischen seiner wirksamen Stellung und seiner unwirksamen Stellung eine Schwenkbewegung aus.

Es versteht sich, dass man das Blockierelement auch linear hin und her bewegbar ausbilden könnte.

Der das Blockierelement 29 bildende Schwenkhebel 35 ist ein zweiarmiger Hebel, dessen einer Hebelarm 37 der Betätigungspartie 27 der Abdeckwand 21 und dessen anderer Hebelarm 38 dem in treibender Verbindung mit dem Antriebsmotor 17 stehenden Teil 30, also dem Gebläserad 31 zugeordnet ist und den Blockiervorsprung 33 bildet.

Der eine Hebelarm 37 weist einen außerhalb der Schnittebene der Figuren 7 und 8 angeordneten Fortsatz 39 auf, der der Betätigungspartie 27 des Schwenkteils 24 gegenüberliegt und von diesem betätigt wird, wie aus einem Vergleich der Figuren 7 und 8 hervorgeht.

Bei geöffneter Abdeckwand 21, wenn die Blockiereinrichtung 22 wirksam ist, liegt der eine Hebelarm 37 des Schwenkhebels 35 mit seiner der Abdeckwand 21 zugewandten Seite an einer gehäusefesten Anschlagfläche 40 an.

Die Kreissäge 15 weist ferner eine ihre Stromversorgung beherrschende Schaltereinrichtung 41 auf, die zwischen einem die Stromversorgung gewährleistenden unwirksamen Zustand und einem die Stromversorgung unterbrechenden wirksamen Zustand schaltbar ist. Dabei bildet die Abdeckwand 21 eine zum Umschalten der Schaltereinrichtung 41 dienende Schaltpartie 42, wobei die Anordnung so getroffen ist, dass sich die Schaltereinrichtung 41 bei geschlossener Abdeckwand 21 in ihrem unwirksamen Zustand und bei geöffneter Abdeckwand 21 in ihrem wirksamen Zustand befindet.

Somit wird beim Öffnen der Abdeckwand 21 nicht nur die Blokkiereinrichtung 22 sondern auch die Schaltereinrichtung 41 wirksam, so dass sowohl die Abtriebswelle 18 blockiert als auch die Stromversorgung unterbrochen wird. Auf diese Weise kann die Kreissäge bei geöffneter Abdeckwand 21 nicht unabsichtlich eingeschaltet werden. Dabei werden alle genannten Funktionen durch das Öffnen und Schließen der Abdeckwand 21 gesteuert.

Zweckmäßigerweise werden die Betätigungspartie 27 zum Betätigen der Blockiereinrichtung 22 und die Schaltpartie 42 zum Umschalten der Schaltereinrichtung 41 von der gleichen Partie der Abdeckwand 21 gebildet.

Zweckmäßigerweise ist der Schaltereinrichtung 41 ein sie betätigendes Schaltelement 43 zugeordnet, das zwischen einer dem unwirksamen Zustand der Schaltereinrichtung 41 entsprechenden Ein-Stellung und einer dem unwirksamen Zustand der Schaltereinrichtung 41 entsprechenden Aus-Stellung verstellbar ist. Dabei wird das Schaltelement 43 beim Ausführungsbeispiel von einem im Maschinengehäuse 20 geradlinig hin und her bewegbar gelagerten Stößel 44 gebildet. Die Bewegungsrichtung des Stößels 44 verläuft parallel zur Abtriebswelle 18. Die Betätigung des Stößels 44 erfolgt nicht unmittelbar durch die Schaltpartie 42 der Abdeckwand 21 sondern über mindestens ein Zwischenglied, wobei beim zweckmäßigen Ausführungsbeispiel die Betätigung über das ein solches Zwischenglied bildende Blockierelement 29 erfolgt.

Wie bereits erwähnt, werden die Schaltpartie 42 und die Betätigungspartie 27 von der gleichen Partie der Abdeckwand 21 gebildet. Diese Abdeckwandpartie 27, 42 greift in der Schließstellung der Abdeckwand 21 an dem einen Hebelarm 37 des zweiarmigen Schwenkhebels 35 an, dessen anderer Hebelarm 38 den Blockiervorsprung 33 der Blockiereinrichtung 22 bildet. Das Schaltelement 43, d.h. der Stößel 44, liegt der der Abdeckwandpartie 27, 42 entgegengesetzten Seite des einen Hebelarms 37 gegenüber und wird von dieser betätigt. Beim Schließen der Abdeckwand 21 wird der Stößel 44 zur Schaltereinrichtung 41 vorgeschoben, so dass die Stromversorgung nicht mehr unterbrochen ist, während der Blockiervorsprung 33 aus dem Gebläserad 31 gelangt, so dass die Blockierung der Abtriebswelle aufgehoben wird. Öffnet man die Abdeckwand 21, unterbricht der Stößel 44 die Stromversorgung und der Blokkiervorsprung 33 gelangt in eine der Gebläserad-Aussparungen 32.

Das Schaltelement 43, d.h. der Stößel 44 wird durch eine Federeinrichtung 45 in Richtung auf seine Aus-Stellung hin belastet.

## Patentansprüche

1. Kreissäge, mit einem Antriebsaggregat (16), das einen elektrischen Antriebsmotor (17) und eine mit dem Antriebsmotor (17) in treibender Verbindung stehende Abtriebswelle (18) mit einem freien Endbereich aufweist, auf dem ein Sägeblatt (7) mittels eines gegen die dem Antriebsaggregat (16) abgewandte Außenseite des Sägeblattes (7) wirkenden Spannelements (19) lösbar festspannbar ist, einem Maschinengehäuse, mit dem eine die Sägeblatt-Außenseite und das Spannelement (19) abdeckende Abdeckwand (21) verbunden ist, und einer zwischen einer unwirksamen Stellung und einer die Abtriebswelle blockierenden wirksamen Stellung verstellbaren Blockiereinrichtung (22), wobei die Abdeckwand (21) zum Sägeblattwechsel aus ihrer das Sägeblatt (7) und das Spannelement (19) abdeckenden Schließstellung in eine vom Sägeblatt (7) entfernte Offenstellung, in der das Spannelement (19) zugänglich ist, überführbar ist und eine Betätigungspartie (27) zum Betätigen der Blockiereinrichtung (22) aufweist, so dass sich die Blockiereinrichtung (22) bei geschlossener Abdeckwand (21) in ihrer unwirksamen Stellung und bei geöffneter Abdeckwand (21) in ihrer wirksamen Stellung befindet, **dadurch gekennzeichnet, dass** die Abdeckwand (21) eine Schaltpartie (42) zum Umschalten einer die Stromversorgung der Kreissäge beherrschenden, zwischen einem die Stromversorgung gewährleistenden unwirksamen Zustand und einem die Stromversorgung unterbrechenden wirksamen Zustand schaltbaren Schaltereinrichtung (41) aufweist, derart, dass sich die Schaltereinrichtung (41) bei geschlossener Abdeckwand (21) in ihrem unwirksamen Zustand und bei geöffneter Abdeckwand (21) in ihrem wirksamen Zustand befindet.

2. Kreissäge nach Anspruch 1, **dadurch gekennzeichnet, dass** die Abdeckwand (21) von einem über eine Schwenkachse (25) schwenkbar mit dem Maschinengehäuse (20) verbundenen und zwischen der Schließstellung und der Offenstellung verschwenkbaren Schwenkteil (24) gebildet wird.

3. Kreissäge nach Anspruch 2, **dadurch gekennzeichnet, dass** die Schwenkachse (25) parallel zur Sägerichtung (5) verläuft.

4. Kreissäge nach Anspruch 3, **dadurch gekennzeichnet, dass** die Schwenkachse (25) am beim Sägen dem Werkstück entgegengesetzten Rand des Schwenkteils (24) angeordnet ist.

5. Kreissäge nach einem der Ansprüche 1 bis 4, **dadurch gekennzeichnet, dass** die Abdeckwand (21) in ihrer Schließstellung mittels einer werkzeuglos zu betätigenden Verschlusseinrichtung (26) mit dem Maschinengehäuse (20) verbunden ist.

6. Kreissäge nach einem der Ansprüche 1 bis 5, **dadurch gekennzeichnet, dass** die Abdeckwand (21) einen bei befestigtem Sägeblatt (7) in der Schließstellung am Sägeblatt (7) vorbei zum Maschinengehäuse (20) hin vorstehenden Betätigungsansatz (28) als Betätigungspartie (27) zum Betätigen der Blockiereinrichtung aufweist.

7. Kreissäge nach einem der Ansprüche 1 bis 6, **dadurch gekennzeichnet, dass** die Blockiereinrichtung (22) ein unmittelbar oder über mindestens ein Zwischenglied von der Betätigungspartie (27) betätigtes Blockierelement (29) aufweist, das in seiner wirksamen Stellung in ein in treibender Verbindung mit dem Antriebsmotor stehendes Teil (30) eingreift.

8. Kreissäge nach Anspruch 7, **dadurch gekennzeichnet, dass** das Blockierelement (29) durch eine Federeinrichtung (34) in Richtung auf seine wirksame Stellung hin belastet ist.

9. Kreissäge nach Anspruch 8, **dadurch gekennzeichnet, dass** das Blockierelement (29) beim Überführen der Abdeckwand (21) in die Offenstellung von der Betätigungspartie (27) frei kommt und sich unter der Wirkung der Federeinrichtung (34) in die wirksame Stellung verstellt.

10. Kreissäge nach einem der Ansprüche 7 bis 9, **dadurch gekennzeichnet, dass** das Blockierelement (29) von einem Schwenkhebel (35) gebildet wird.

11. Kreissäge nach Anspruch 10, **dadurch gekennzeichnet, dass** der Schwenkhebel (35) ein zweiarmiger Hebel ist, dessen einer Hebelarm (37) der Betätigungspartie (27) der Abdeckwand (21) und dessen anderer Hebelarm (38) dem in treibender Verbindung mit dem Antriebsmotor (17) stehenden Teil (30) zugeordnet ist.

12. Kreissäge nach einem der Ansprüche 7 bis 11, **dadurch gekennzeichnet, dass** das in treibender Verbindung mit dem Antriebsmotor (17) stehende Teil (30) in das das Blockierelement (29) eingreift, ein Gebläserad (31) ist.

13. Kreissäge nach einem der Ansprüche 1 bis 12, **dadurch gekennzeichnet, dass** die Betätigungspartie (27) zum Betätigen der Blockiereinrichtung (22) und die Schaltpartie (42) zum Umschalten der Schaltereinrichtung (41) von der gleichen Abdeckwandpartie gebildet werden.

14. Kreissäge nach einem der Ansprüche 1 bis 13, **dadurch gekennzeichnet, dass** der Schaltereinrichtung (41) ein sie betätigendes Schaltelement (43) zugeordnet ist, das zwischen einer dem unwirksamen Zustand der Schaltereinrichtung (41) entsprechenden Ein-Stellung und einer dem unwirksamen Zustand der Schaltereinrichtung (41) entsprechenden Aus-Stellung verstellbar ist und seinerseits unmittelbar oder über mindestens ein zwischenglied von der Schaltpartie (42) der Abdeckwand (21) betätigt wird.

15. Kreissäge nach Anspruch 14, **dadurch gekennzeichnet, dass** das Schaltelement (43) von einem geradlinig hin und her bewegbar gelagerten Stößel (44) gebildet wird.

16. Kreissäge nach Anspruch 14 oder 15, **dadurch gekennzeichnet, dass** das Schaltelement (43) durch eine Federeinrichtung (45) in Richtung auf seien Aus-Stellung hin belastet ist.

17. Kreissäge nach einem der Ansprüche 14 bis 16, **dadurch gekennzeichnet, dass** das Schaltelement (43) über das ein Zwischenglied bildende Blockierelement (29) von der Schaltpartie (42) betätigt wird.

18. Kreissäge nach Anspruch 17, **dadurch gekennzeichnet, dass** das Schaltelement (43) von dem der Betätigungspartie (27) der Abdeckwand (21) zugeordneten Hebelarm (37) des das Blockierelement (29) bildenden zweiarmigen Schwenkhebels (35) betätigt wird.

## Claims

1. Circular saw, with a drive unit (16) which has an electrical drive motor (17) and, in driving connection with the drive motor (17), an output shaft (18) with a free end section on which a saw blade (7) is releasably clamped by means of a clamping element (19) acting against the outer side of the saw blade (7) facing away from the drive unit (16), with a machine casing to which is joined a cover (21) which covers the saw blade outer side and the clamping element (19), and an interlocking device (22) adjustable between an inoperative position and an operative position locking the output shaft, wherein the cover (21) may be transferred for the purpose of saw blade changeover from its closed position covering the saw blade (7) and the clamping element (19) into an open position removed from the saw blade (7) and in which the clamping element (19) is accessible, said cover having an actuating section (27) to actuate the interlocking device (22), so that the interlocking device (22) is in its inoperative position with the cover (21) closed and is in its operative position with the cover (21) open, **characterised in that** the cover (21) has a switching section (42) for switching a switchable switch mechanism (41) controlling the power supply of the circular saw between an inoperative state ensuring the power supply and an operative state interrupting the power supply, in such a way that with the cover (21) closed, the switch mechanism (41) is in its inoperative state, and with the cover (21) open, the switch mechanism is in its operative state.

2. Circular saw according to claim 1, **characterised in that** the cover (21) is formed by a pivoting section (24) connected to the machine casing (20) and able to pivot between the closed position and the open position around a pivot axis (25).

3. Circular saw according to claim 2, **characterised in that** the pivot axis (25) runs parallel to the direction of sawing (5).

4. Circular saw according to claim 3, **characterised in that** the pivot axis (25) is located on the edge of the pivoting section (24) which is opposite the workpiece during sawing.

5. Circular saw according to any of claims 1 to 4, **characterised in that** in its closed position the cover (21) is joined to the machine casing (20) by a locking device (26) which may be operated without tools.

6. Circular saw according to any of claims 1 to 5, **characterised in that** the cover (21) has an actuating lug (28) which, with the saw blade (7) fixed in the closed position, extends past the saw blade (7) to the machine casing (20) as an actuating section (27) to actuate the interlocking device.

7. Circular saw according to any of claims 1 to 6, **characterised in that** the interlocking device (22) has an interlocking element (29), actuated by the actuating section (27) directly or through one or more intermediate links, which in its operative position engages in a part (30) which is in driving connection with the drive motor.

8. Circular saw according to claim 7, **characterised in that** the interlocking element (29) is biased by a spring mechanism (34) in the direction of its operative position.

9. Circular saw according to claim 8, **characterised in that** the interlocking element (29), in transferring the cover (21) into the open position, becomes free from the actuating section (27) and shifts into the operative position under the action of the spring mechanism (34).

10. Circular saw according to any of claims 7 to 9, **characterised in that** the interlocking element (29) is formed by a pivoted lever (35).

11. Circular saw according to claim 10, **characterised in that** the pivoted lever (35) is a two-arm lever with one lever arm (37) assigned to the actuating section (27) of the cover (21) and the other lever arm (38) assigned to the part (30) which is in driving connection with the drive motor (17).

12. Circular saw according to any of claims 7 to 11, **characterised in that** the part (30) which is in driving connection with the drive motor (17) and in which the interlocking element (29) engages is an impeller (31).

13. Circular saw according to any of claims 1 to 12, **characterised in that** the actuating section (27) for actuating the interlocking device (22) and the switching section (42) for switching the switch mechanism (41) are formed by the same cover section.

14. Circular saw according to any of claims 1 to 13, **characterised in that** the switch mechanism (41) is assigned a switching element (43) to actuate it, which may be switched between an on position corresponding to the inoperative state of the switch mechanism (41) and an off position corresponding to the inoperative state of the switch mechanism (41), and is in turn actuated, directly or via one or more intermediate links, by the switching section (42) of the cover (21).

15. Circular saw according to claim 14, **characterised in that** the switching element (43) is formed by a ram (44) which may be moved to and fro in a straight line.

16. Circular saw according to claim 14 or 15, **characterised in that** the switching section (42) is biased by a spring mechanism (45) in the direction of its off position.

17. Circular saw according to any of claims 14 to 16, **characterised in that** the switching element (43) is actuated by the switching section (42) via the interlocking element (29) forming an intermediate link.

18. Circular saw according to claim 17, **characterised in that** the switching element (43) is actuated by the lever arm (37), assigned to the actuating section (27) of the cover (21), of the two-arm pivoted lever (35) forming the interlocking element (29).

## Revendications

1. Scie circulaire comportant un ensemble d'entraînement (16) qui comprend un moteur d'entraînement (17) électrique et un arbre entraîné (18) se trouvant en relation motrice avec le moteur d'entraînement (17), l'arbre entraîné comportant une zone d'extrémité libre, sur laquelle une lame de scie (7) peut être fixée de manière amovible à l'aide d'un élément de serrage (19) agissant contre le côté externe de la lame de scie (7) tourné du côté opposé à celui de l'ensemble d'entraînement (16), un boîtier de machine auquel est reliée une paroi de recouvrement (21) recouvrant le côté externe de la lame de scie et l'élément de serrage (19), et un dispositif de blocage (22) réglable entre une position inactive et une position active bloquant l'arbre entraîné, la paroi de recouvrement (21) pouvant être déplacée pour changer la lame de scie et passer de sa position de fermeture, recouvrant la lame de scie (7) et l'élément de serrage (19), à une position d' ouverture éloignée de la lame de scie (7), dans laquelle l'élément de serrage (19) est accessible, et une partie d'actionnement (27) servant à actionner le dispositif de blocage (22), de sorte que le dispositif de blocage (22) se trouve en position inactive lorsque la paroi de recouvrement (21) est fermée et en position active lorsque la paroi de recouvrement (21) est ouverte, **caractérisée en ce que** la paroi de recouvrement (21) comprend une partie de commutation (42) servant à commuter un dispositif de commutation (41) commandant l'alimentation électrique de la scie circulaire, et pouvant être commuté entre un état inactif garantissant l'alimentation électrique et un état actif interrompant l'alimentation électrique, de telle sorte que le dispositif de commutation (41) se trouve dans son état inactif lorsque la paroi de recouvrement (21) est fermée et dans son état actif lorsque la paroi de recouvrement (21) et ouverte.

2. Scie circulaire selon la revendication 1, **caractérisée en ce que** la paroi de recouvrement (21) est formée d'un élément de pivotement (24) pouvant être pivoté entre la position de fermeture et la position d'ouverture et relié au boîtier de la machine (20) de manière pivotante via un axe de pivotement (25).

3. Scie circulaire selon la revendication 2, **caractérisée en ce que** l'axe de pivotement (25) se déplace parallèlement au sens de la scie (5).

4. Scie circulaire selon la revendication 3, **caractérisée en ce que** l'axe de pivotement (25) est disposé sur le bord de l'élément de pivotement (24) à l'opposé de la pièce usinée lors du sciage.

5. Scie circulaire selon l'une des revendications 1 à 4, **caractérisée en ce que** la paroi de recouvrement (21) est reliée au boîtier de la machine (20) dans sa position de fermeture à l'aide d'un dispositif de fermeture (26) à actionner sans outillage.

6. Scie circulaire selon l'une des revendications 1 à 5, **caractérisée en ce que** la paroi de recouvrement (21) comprend une pièce d'actionnement (28) comme partie d'actionnement (27) servant à actionner le dispositif de blocage, qui dans le cas d'une lame de scie (7) fixée, en position de fermeture, fait saillie au-delà de la lame de scie (7) en direction du boîtier de la machine (20).

7. Scie circulaire selon l'une des revendications 1 à 6, **caractérisée en ce que** le dispositif de blocage (22) comprend un élément de blocage actionné directement ou via au moins un élément intermédiaire (29) de la partie d'actionnement (27), qui coopère dans sa position active avec un élément (30) se trouvant en relation motrice avec le moteur d'entraînement.

8. Scie circulaire selon la revendication 7, **caractérisée en ce que** l'élément de blocage (29) est soumis à un effort par un dispositif à ressort (34) dans le sens de sa position active.

9. Scie circulaire selon la revendication 8, **caractérisée en ce que** l'élément de blocage (29) se libère de la partie d'actionnement (27) lors du déplacement de la paroi de recouvrement (21) en position ouverte et passe sous l'influence du dispositif à ressort (34) en position active.

10. Scie circulaire selon les revendications 7 à 9, **caractérisée en ce que** l'élément de blocage (29) est formé d'un levier pivotant (35).

11. Scie circulaire selon la revendication 10, **caractérisée en ce que** le levier pivotant (35) est un levier à deux bras dont un bras de levier (37) est associé à la partie d'actionnement (27) de la paroi de recouvrement (21) et dont l'autre bras de levier (38) est associé à l'élément (30) se trouvant en relation motrice avec le moteur d'entraînement (17).

12. Scie circulaire selon l'une des revendications 7 à 11, **caractérisée en ce que** l'élément (30) se trouvant en relation motrice avec le moteur d'entraînement (17) est une roue de ventilateur dans laquelle s'enclenche l'élément de blocage (29).

13. Scie circulaire selon l'une des revendications 1 à 12 **caractérisée en ce que** la partie d'actionnement (27) servant à actionner le dispositif de blocage (22) et la partie de commutation (42) servant à commuter un dispositif de commutation (41) sont formées à partir de la même portion de paroi de recouvrement.

14. Scie circulaire selon l'une des revendications 1 à 13, **caractérisée en ce que** le dispositif de commutation (41) est associé à un élément de commutateur (43) qui l'active, qui peut être déplacé entre une position marche correspondant à l'état inactif du dispositif de commutation (41) et une position arrêt correspondant à l'état inactif du dispositif de commutation (41) et qui pour sa part est actionné directement ou via au moins un élément intermédiaire de la partie de commutation (42) de la paroi de recouvrement (21).

15. Scie circulaire selon la revendication 14, **caractérisée en ce que** l'élément de commutation (43) est formé à partir d'un poussoir (44) monté de manière rectiligne et pouvant se déplacer d'avant en arrière.

16. Scie circulaire selon la revendication 14 ou 15, **caractérisée en ce que** l'élément de commutation (43) est soumis à un effort via un dispositif à ressort (45) dans le sens de sa position arrêt.

17. Scie circulaire selon l'une des revendications 14 à 16, **caractérisée en ce que** l'élément de commutation (43) est actionné via l'élément de blocage (29) de la partie de commutation (42) formant un élément intermédiaire.

18. Scie selon la revendication 17, **caractérisée en ce que** l'élément de commutation (43) est actionné par le bras de levier (37) du levier pivotant à deux bras formant l'élément de blocage (29), associé à la partie d'actionnement (27) de la paroi de recouvrement (21).
